# EUROPÄISCHE PATENTSCHRIFT

(11) **EP 0 593 721 B1**
(45) Veröffentlichungstag und Bekanntmachung des Hinweises auf die Patenterteilung: **13.03.1996**
(21) Anmeldenummer: 93909896.8
(22) Anmeldetag: 05.05.1993
(51) Int. Cl.: F16B 13/14

(54) **ANKER ZUR VERANKERUNG MITTELS EINER VERBUNDMASSE IN EINEM BOHRLOCH EINES BETONTEILS**
ANCHOR FOR ANCHORING BY MEANS OF A COMPOUND IN A DRILLING IN A CONCRETE COMPONENT
BOULON D'ANCRAGE POUR L'ANCRAGE AU MOYEN D'UNE MATIERE COMPOSITE DANS UN TROU PERCE DANS UN ELEMENT EN BETON

(30) Priorität: 18.05.1992 DE 4216214; 03.07.1992 DE 4221853
(43) Veröffentlichungstag der Anmeldung: 27.04.1994
(73) Patentinhaber: fischerwerke Artur Fischer GmbH & Co. KG, D-72178 Waldachtal (DE)
(72) Erfinder: FISCHER, Artur, D-7244 Tumlingen/Waldachtal 3 (DE); WEBER, Wilfried, D-7294 Schopfloch/Unteriflingen (DE)
(86) Internationale Anmeldenummer: EP9301095
(87) Internationale Veröffentlichungsnummer: WO9323676

(56) Entgegenhaltungen:
- EP-A- 0 186 991
- EP-A- 0 251 887
- DE-A- 3 733 854

## Beschreibung

Die Erfindung betrifft einen Anker zur Verankerung mittels einer Verbundmasse in einem Bohrloch eines Betonteils gemäß der Gattung des Anspruches 1.

Es ist bekannt, zur Verankerung einer Gewindestange mittels einer Verbundmasse ein Bohrloch auszubilden, welches im Bereich des Bohrlochgrundes eine Hinterschneidung aufweist. In der DE-A1-35 16 866 ist eine solche Verankerung beschrieben. Die Befestigung dieses bekannten Ankers erfolgt dadurch, daß in das Bohrloch eine Glasampulle eingeschoben wird, die eine Verbundmasse aus Polyesterharz, einem Härter und Zuschlagstoffen enthält. Beim Einsetzen des Ankers in das Bohrloch wird die Glasampulle zerstört und die Komponenten der Verbundmasse durch Vermengen aktiviert. Nach dem Aushärten der Verbundmasse ist der Anker fest im Bohrloch eingebunden und verankert. Die Verankerung beruht dabei im wesentlichen auf dem Klebeverbund zwischen Verbundmasse und Bohrlochwandung. Dieser Verbund wird jedoch dadurch erheblich gemindert, wenn durch die Verankerungsstelle ein Riß verläuft. Durch die Vergrößerung des Bohrloches infolge des Risses lößt sich die Verbundmasse an der Bohrlochwandung ab, so daß im geraden Schaftteil des Ankers nur noch geringe Haltekräfte vorliegen. Der bekannte Anker besitzt jedoch eine konische Erweiterung im Bereich der Hinterschneidung des Bohrloches, so daß dort weiterhin größere Haltekräfte vorhanden sind. Diese hängen allerdings von der Ausbildung der Hinterschneidung und vom Anteil des hinterschnittenen Bereichs an der Gesamtlänge der Bohrung ab.

Die Erstellung eines hinterschnittenen Bohrloches erfordert Spezialwerkzeuge und in der Regel auch einen größeren Aufwand bei der Erstellung des Bohrloches. Aus diesem Grund wurden auch schon Versuche unternommen, durch besondere Ausgestaltungen des Verbundankers in zylindrischen Bohrlöchern die Rißempfindlichkeit zu reduzieren. So wurde beispielsweise vorgeschlagen, den Gewindebolzen des Ankers mit einem Konus zu versehen, der mittels einer Beschichtung eine Gleitfähigkeit gegenüber dem ausgehärteten Bindemittelkern aufweist. Damit soll erreicht werden, daß der Gewindebolzen im Bindemittelkern zum Ausgleich der Rißerweiterung nachrutscht. Ein derartiges Nachrutschen ist allerdings nur erreichbar, wenn sich der gesamte Gewindebolzen gegenüber dem ausgehärteten Bindemittelkern ablöst. Dadurch tritt allerdings bereits eine erhebliche Reduzierung des Haltewertes ein. Ferner ist der Bindemittelkern wenig druckstabil, so daß schon bei relativ geringen Kräften ein Durchziehen des Gewindebolzens durch den Bindemittelkern eintritt.

Aus der EP-A-251 887 ist ein in einem zylindrischen Bohrloch zu setzender Anker bekannt, dessen vorderer Bereich eine konische Erweiterung mit einem sich daran anschließenden zylindrischen Abschnitt aufweist. Über diesen Bereich und einem Teilstück des Ankers ist ein Kunststoffmantel aufgebracht, dessen Außenfläche mit umlaufenden Nuten versehen ist. Durch den Kunststoffmantel ergibt sich eine Verdickung des vorderen Teils des Ankers, die in der ausgehärteten Verbundmasse einen günstigeren Formschluß bildet. Der gegenüber der Verbundmasse weichere Kunststoffmantel dient jedoch in erster Linie dazu, auf den Ankerbolzen wirkende Schockbelastungen elastisch abzufedern, um einen Bruch des Ankerbolzens zu vermeiden. Da jedoch eine axiale Verschiebung zwischen dem Ankerbolzen und dem dickwandigen, vollständig von Verbundmasse umgebenen Kunststoffmantel nicht eintreten kann, ergibt sich bei einer Bohrlocherweiterung durch Rißbildung ebenfalls eine Ablösung der Verbundmasse von der Bohrlochwandung, die zu einer Reduzierung des Haltewertes führt.

Der Erfindung liegt die Aufgabe zugrunde, einen Anker zur Verankerung mittels einer Verbundmasse in einem zylindrischen Bohrloch eines Betonteils zu schaffen, der bei einer Verankerung in der Zugzone und den dabei auftretenden Bohrlocherweiterungen durch Rißbildung hohe Sicherheitsreserven besitzt.

Die Lösung dieser Aufgabe wird durch die im Anspruch 1 angegebenen Merkmale erreicht. Der Anker besteht aus einem Gewindebolzen mit einem reduzierten Abschnitt, über den eine aufweitbare Ankerhülse aus Kunststoff übergestülpt ist. In Richtung Bohrlochgrund schließt sich an den zylindrischen Abschnitt ein Spreizkonus an, der sich zum Bohrlochgrund hin erweitert. An diesen Spreizkonus ist unter Bildung einer Anschlagschulter ein Kopfteil angesetzt, dessen Außendurchmesser dem Durchmesser des Gewindebolzens entspricht. Die Ankerhülse sitzt auf dieser Anschlagschulter auf und bildet damit eine Abdichtung, die ein Eindringen von Bindemittel in die Innenbohrung der Ankerhülse verhindert. Zur Verankerung wird der Anker in ein Bohrloch eingetrieben, in der sich eine mit den Komponenten des Bindemittels gefüllte Glasampulle befindet. Das Einbringen des Ankers erfolgt über eine Bohrmaschine im Drehgang, mit der durch Drehen des Gewindebolzens und gleichzeitiger Vorschubbewegung die Glasampulle mit der am Kopfteil angeordneten Keilspitze zerstört und die Komponenten des Bindemittels vermischt werden. Durch das vom Bohrlochgrund her aufsteigende Bindemittel wird das Bohrloch und die Längsrillen der Ankerhülse vollständig mit Bindemittel ausgefüllt.

Nach dem Aushärten der Verbundmasse ist die Ankerhülse und damit der mit der Anschlagschulter des Kopfteiles an der vorderen Stimseite der Hülse anstoßende Gewindebolzen fest im Bohrloch verankert. Tritt nunmehr durch Rißbildung eine Bohrlocherweiterung ein, löst sich die Verbundmasse von der Mantelfläche der aus Kunststoff bestehenden Ankerhülse ab. Durch die Elastizität und Nachgiebigkeit der Kunststoffhülse wird der Gewindebolzen durch die an ihm angreifende Zugkraft relativ zur Hülse axial verschoben. Dadurch wird der Spreizkonus am Gewindebolzen in die Ankerhülse eingezogen, so daß sowohl eine Aufweitung als auch Stauchung der Kunststoffhülse eintritt. Beide Wirkungen führen zu einem Ausgleich der Bohrlocherweiterung, so daß die ursprüngliche Haltekraft des Ankers vor Eintritt des Risses aufrecht erhalten bleibt. Durch die in den Längsrillen der Ankerhülse ausgehärtete Verbundmasse wird im Bereich der Ankerhülse eine Zahnprofilbohrung geschaffen, deren Kerndurchmesser kleiner ist als der Außendurchmesser des Kopfteiles. Somit entsteht über die Verbundmasse zusätzlich ein weiterer Formschluß, der die Abstützung des Gewindebolzens durch die Ankerhülse unterstützt. Aufgrund der Verengung des Bohrloches im Bereich des reduzierten Abschnittes und der Ausgleichsmöglichkeit der Bohrlocherweiterung aufgrund der aus Kunststoff bestehenden Ankerhülse ergibt sich die Eignung des erfindungsgemäßen Ankers für einen Einsatz in der Zugzone eines Betonteiles.

Zur Verbesserung der Verzahnung der Ankerhülse mit der ausgehärteten Verbundmasse ist es zweckmäßig, die Mantelfläche der Ankerhülse zusätzlich noch mit umlaufenden Rillen zu versehen. Damit entsteht ein Verbund zwischen Längs- und Querrillen, die sich gegenseitig abstützen. Durch den Auslauf der Längsrillen in einem Abstand zur vorderen Stirnseite der Ankerhülse entsprechend dem Verlauf des Innenkonus der Ankerhülse bildet die in diesem Bereich ausgehärtete Verbundmasse eine konusartige Kontur aus, die den Verkeileffekt der Ankerhülse durch Einziehen des Gewindebolzens verstärkt.

Durch den dem Gewindebolzen angeglichenen Außendurchmesser der Ankerhülse ergibt sich ein Anker mit einem durchgehend gleichen Außendurchmesser. Damit ist zum Setzen des Ankers ein Bohrloch im Betonteil möglich, das nur unwesentlich größer ist als das Nennmaß des Gewindebolzens. Die Rillentiefe in der Ankerhülse ist so gewählt, daß etwa ein Steg von 0,3 bis 0,5 mm als Rillengrund stehen bleibt. Damit wird ein Optimum an Verengung der Bohrung im Bereich der Ankerhülse erreicht.

In einer weiteren Ausgestaltung der Erfindung kann der Durchmesser des Kopfteiles etwas größer als der Durchmesser der Ankerhülse und gleichzeitig der zylindrische Abschnitt des Kopfteiles mit zwei Flächen versehen sein, die vorzugsweise parallel zu den Flächen der Keilspitze verlaufen. Mit dieser Gestaltung wird das Spreizvermögen des Kopfteiles und damit der Durchzugswiderstand für den Gewindebolzen erheblich gesteigert. Damit können auch bei größeren Rißbreiten und der damit verbundenen Bohrlocherweiterung ausreichend hohe Haltewerte erzielt werden. Der Durchmesser des Kopfteiles kann bis auf etwa 0,3 mm an den Durchmesser des Bohrloches angeglichen werden. Um ein Aufsteigen der Verbundmasse vom Bohrlochgrund entlang des Ankers beim Setzvorgang zu ermöglichen bzw. zu erleichtern, sind die beiden vorzugsweise parallel zu den Flächen der Keilspitze verlaufenden Flächen am zylindrischen Abschnitt des Kopfteiles vorgesehen. Über die Schrägflächen der Keilspitze wird die Verbundmasse durch die beiden Spalte gedrückt, die durch die Flächen am zylindrischen Abschnitt des Kopfteiles und der Bohrlochwandung gebildet werden. Die Fortsetzung der Schrägflächen der Keilspitze durch die Flächen am zylindrischen Abschnitt verbessert auch in Verbindung mit der Rotationsbewegung des Ankers beim Setzen die Vermengung der Komponenten der Verbundmasse und damit den Aushärtprozeß.

Um den Durchflußwiderstand so gering wie möglich zu halten und gleichzeitig ein Höchstmaß an Spreizvermögen für die Ankerhülse durch das Kopfteil zu erhalten, hat es sich als zweckmäßig erwiesen, das Schlüsselmaß der beiden Flächen am zylindrischen Abschnitt des Kopfteiles annähernd dem größten Durchmesser des Spreizkonusses anzugleichen.

Die Erfindung wird anhand in der Zeichnung dargestellter Ausführungsbeispiele näher erläutert:

Es zeigen:

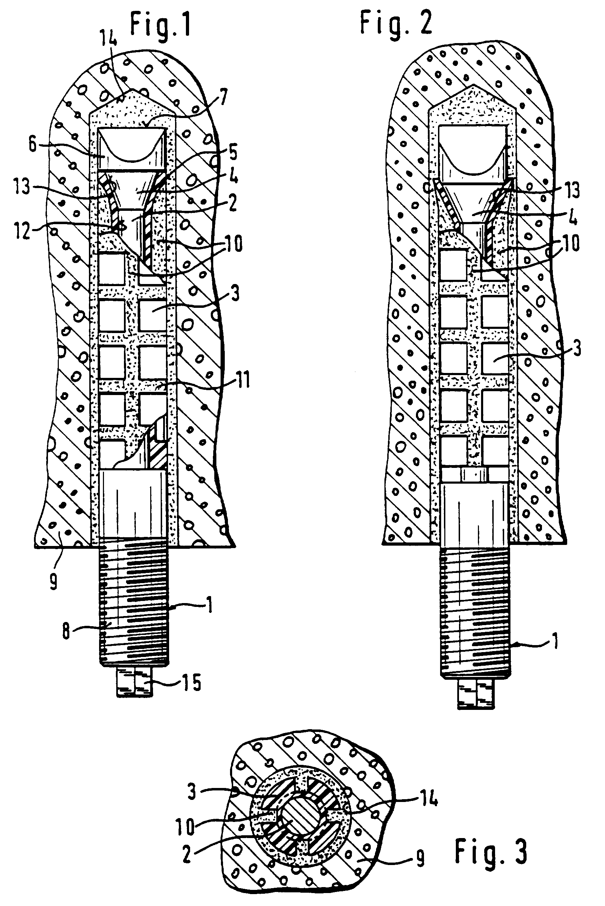

- Figur 1: ein Anker teilweise im Längsschnitt,
- Figur 2: den Anker nach einer Bohrlocherweiterung durch Rißbildung,
- Figur 3: einen Querschnitt des Ankers nach Figur 1,
- Figur 4: das Kopfteil eines weiteren Ausführungsbeispieles des Ankers und
- Figur 5: die Stimseite des Ankers gemäß Figur 4.

Der Anker besteht aus einem Gewindebolzen 1 mit einem reduzierten Abschnitt 2, über den eine Hülse 3 aus vorzugsweise glasfaserverstärktem Kunststoff übergestülpt ist. An den Abschnitt 2 mit reduziertem Durchmesser schließt sich ein Spreizkonus 4 an, an dem wiederum unter Bildung einer Anschlagschulter 5 ein Kopfteil 6 des Gewindebolzens angesetzt ist. Das Kopfteil 6 ist zur Zerstörung der Mörtelpatrone mit einer Keilspitze 7 versehen. Der Gewindebolzen 1 besitzt einen Gewindeabschnitt 8, auf den eine Mutter zur Befestigung eines Gegenstandes an der Oberfläche des Betonteiles 9 aufgeschraubt werden kann.

Die Ankerhülse 3 weist auf ihrer Mantelfläche Längsrillen 10 und in größeren Abständen umlaufende Rillen 1 1 auf. Im Bereich des Spreizkonus 4 ist die Innenbohrung 12 der Ankerhülse mit einem Innenkonus 13 versehen, der eng auf dem Spreizkonus 4 aufsitzt. Gleichzeitig sitzt die Ankerhülse 3 auf der Anschlagschulter 5 auf, so daß sich eine Abdichtung der Innenbohrung der Ankerhülse ergibt. Die Längsrillen 10 laufen in einem Abstand zu dieser Anschlagschulter 5 entsprechend dem Konuswinkel des Spreizkonusses 4 aus.

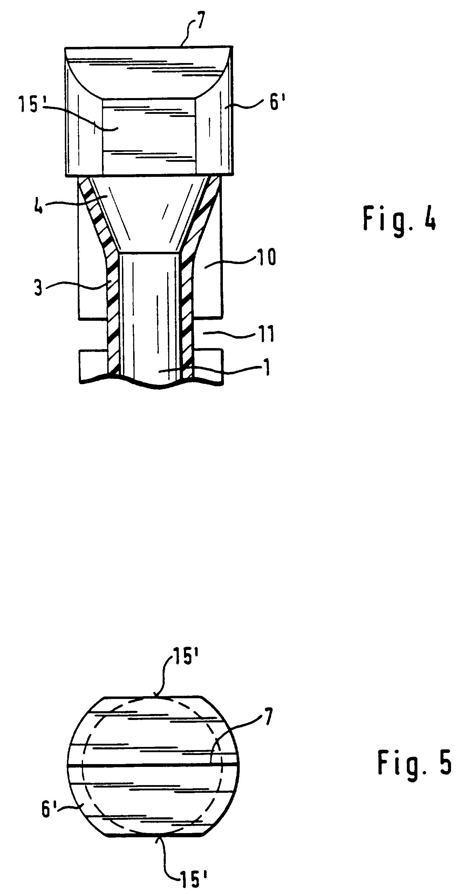

Zur Verankerung des Ankers wird in dem Betonteil 9 eine Bohrung 14 erstellt, in die beispielsweise mittels einer Glasampulle ein Polyesterharz mit Härter und Zuschlagstoffen eingesetzt wird. Zum Eintreiben und Drehen des Gewindebolzens 1 dient ein Mehrkant 15, auf den das in einer Bohrmaschine eingespannte Eintreibwerkzeug aufsetzbar ist. Beim Eintreiben des Gewindebolzens wird die Glasampulle zerstört und gleichzeitig das Harz mit dem Härter und den Zuschlagstoffen vermischt. Durch die Längsrillen ergibt sich nach dem Aushärten der Verbundmasse eine Verengung der Bohrung, die im Bereich des reduzierten Abschnittes 2 in Verbindung mit der Ankerhülse 3 eine formschlüssige Verankerung des Gewindebolzens 1 bewirkt. Diese zahnförmige Verengung der Bohrung 14 ist besonders deutlich in Figur 3 erkennbar. Die Sicherung des Gewindebolzens 1 in der Ankerhülse 3 erfolgt durch das Aufsitzen des Kopfteiles 6 mit seiner Anschlagschulter 5 auf der Stimseite der Ankerhülse 3. Beim Auftreten eines Risses und der dadurch bedingten Bohrlocherweiterung läßt die Abstützung der Ankerhülse 3 durch die ausgehärtete Verbundmasse etwas nach. Dadurch wird der Gewindebolzen 1 durch die an ihm angreifende Zugkraft axial verschoben, so daß der Spreizkonus 4 in den Innenkonus 13 der Ankerhülse 3 einzieht. Die aus Kunststoff bestehende Ankerhülse 3 weitet sich dabei auf und verstärkt wiederum den Spreizdruck auf die Bohrlochwandung und insbesondere auf die durch den Auslauf der Längsrillen 10 sich ergebende konische Innenkontur der Verbundmasse. Gleichzeitig ergibt sich auch eine geringfügige Stauchung der Ankerhülse 3, die im übrigen Bereich der Ankerhülse die Bohrlocherweiterung ausgleicht. Die Ankerhülse 3 bleibt somit fest und unverrückbar in der ausgehärteten Verbundmasse eingebettet, so daß die volle Haltekraft des Gewindebolzens 1 und damit des Ankers erhalten bleibt.

Die Ankerhülse 3 kann auf dem reduzierten Abschnitt 2 durch Umspritzen aufgebracht werden, wobei der Gewindebolzen als Kem für das Umspritzen mit Kunststoff dient. Wird die Ankerhülse als separates Teil hergestellt, ist es zweckmäßig, den Gewindebolzen zweiteilig auszuführen und den reduzierten Abschnitt 2 mit dem hinteren Teil des Gewindebolzens nach dem Überstülpen der Ankerhülse 3 aufzuschrauben oder anderweitig zu verbinden.

Das in Figur 4 und 5 dargestellte Kopfteil 6' des Gewindebolzens 1 weist einen Durchmesser auf, der etwas größer ist als der Durchmesser der Ankerhülse 3. Für einen Verbundanker mit einem Gewindebolzen M12 und einem Ankerhülsendurchmesser von 12 mm wird ein Bohrlochdurchmesser im zu verankernden Betonteil von 14 mm benötigt. Bei einem Verbundanker dieser Durchmessergröße kann der Durchmesser des Kopfteiles etwa 13,7 mm betragen. Zur Bildung eines ausreichenden Spalts für die Verbundmasse ist der zylindrische Abschnitt des Kopfteiles 6' mit zwei Flächen 15 versehen, die parallel zu den Schrägflächen der Keilspitze 7 verlaufen. Das Schlüsselmaß der beiden Flächen 15 entspricht annähernd dem größten Durchmesser des Spreizkonusses 4. Bei einem Verbundanker mit den zuvor angegebenen Durchmesserverhältnissen empfiehlt sich ein Schlüsselmaß von etwa 12,0 bis 12,5 mm.

## Patentansprüche

1. Anker zur Verankerung mittels einer Verbundmasse in einem Bohrloch (14) eines Betonteiles (9) oder dgl. mit einem Gewindebolzen (1), der an seinem dem Bohrloch zugewandten Ende einen zum Ende sich erweiternden Spreizkonus (4) aufweist, an den sich unter Bildung einer Anschlagschulter (5) ein Kopfteil (6) mit einer Keilspitze (7) anschließt und der vom kleinsten Durchmesser des Spreizkonus (4) ausgehend einen über einen Teil der Länge des Gewindebolzens verlaufenden Abschnitt (2) mit reduziertem Durchmesser besitzt, auf dem eine von der Anschlagschulter (5) des Kopfteiles (6) bis zum Ende des Abschnittes (2) sich erstreckende und mittels des Spreizkonus (4) aufweitbare Ankerhülse (3) angeordnet ist, die aus Kunststoff besteht und deren Mantelfläche mit Längsrillen (10) versehen ist.

2. Anker nach Anspruch 1, **dadurch gekennzeichnet**, daß die Mantelfläche der Ankerhülse (3) zusätzlich umlaufende Rillen (11) aufweist.

3. Anker nach Anspruch 1, **dadurch gekennzeichnet**, daß die Innenbohrung (12) der Ankerhülse (3) dem reduzierten Durchmesser des Abschnittes (2) entspricht, und daß die Ankerhülse (3) im Bereich des Spreizkonus (4) des Gewindebolzens (1) einem dem Spreizkonus angepaßten Innenkonus (13) aufweist.

4. Anker nach Anspruch 1, **dadurch gekennzeichnet**, daß die Längsrillen (10) in einem Abstand zur vorderen Stirnseite der Ankerhülse (3) entsprechend dem Verlauf des Innenkonus (13) der Ankerhülse (3) auslaufen.

5. Anker nach Anspruch 1, **dadurch gekennzeichnet**, daß der Außendurchmesser der Ankerhülse (3) etwa dem Außendurchmesser des Gewindebolzens (1) entspricht.

6. Anker nach Anspruch 1, **dadurch gekennzeichnet**, daß die Rillentiefe etwa 0,3 bis 0,5 mm geringer ist als die Wandungsdicke der Ankerhülse (3).

7. Anker nach einem der vorhergehenden Ansprüche, **dadurch gekennzeichnet**, daß der Durchmesser des Kopfteiles (6) etwas größer ist als der Durchmesser der Ankerhülse (3), und daß der zylindrische Abschnitt des Kopfteiles (6) mit zwei Flächen (15) versehen ist, die vorzugsweise parallel zu den Schrägflächen der Keilspitze (7) verlaufen.

8. Anker nach Anspruch 7, **dadurch gekennzeichnet**, daß das Schlüsselmaß der beiden Flächen (15) annähernd dem größten Durchmesser des Spreizkonusses (4) entspricht.

## Claims

1. Anchoring means for anchoring by means of a bonding mass in a drilled hole (14) in a concrete part (9) or the like with a threaded bolt (1), which has at its end towards the drilled hole an expansion cone (4) widening out to its end, adjoining which cone, forming at the same time a stop shoulder (5), there is a head part (6) with a wedge-like point (7), and which threaded bolt (1), starting from the smallest diameter of the expansion cone (4), has a portion (2) of reduced diameter extending over part of the length of the threaded bolt, on which portion (2) there is arranged an anchoring sleeve (3) which extends from the stop shoulder (5) of the head part (6) to the end of the portion (2) and can be expanded by means of the expansion cone (4), and which consists of plastics material and the outer surface of which is provided with longitudinal grooves (10).

2. Anchoring means according to Claim 1, characterized in that the outer surface of the anchoring sleeve (3) additionally has circumferential grooves (11).

3. Anchoring means according to Claim 1, characterized in that the internal bore (12) of the anchoring sleeve (3) corresponds to the reduced diameter of the portion (2), and in that the anchoring sleeve (3) has in the region of the expansion cone (4) of the threaded bolt (1) an inner cone (13) matched to the expansion cone.

4. Anchoring means according to Claim 1, characterized in that the longitudinal grooves (10) terminate at a distance from the front end face of the anchoring sleeve (3) corresponding to the course of the inner cone (13) of the anchoring sleeve (3).

5. Anchoring means according to Claim 1, characterized in that the outside diameter of the anchoring sleeve (3) corresponds approximately to the outside diameter of the threaded bolt (1).

6. Anchoring means according to Claim 1, characterized in that the groove depth is approximately 0.3 to 0.5 mm less than the wall thickness of the anchoring sleeve (3).

7. Anchoring means according to one of the preceding Claims, characterized in that the diameter of the head part (6) is somewhat larger than the diameter of the anchoring sleeve (3), and that the cylindrical portion of the head part (6) is provided with two surfaces (15) which preferably extend parallel to the oblique surfaces of the wedge-like point (7).

8. Anchoring means according to Claim 7, characterized in that the key dimension of the two surfaces (15) corresponds approximately to the maximum diameter of the expansion cone (4).

## Revendications

1. Boulon d'ancrage pour l'ancrage, au moyen d'une masse composite, dans un trou (14) percé dans un élément en béton (9) ou élément similaire, muni d'une tige filetée (1) présentant, à son extrémité tournée vers le trou foré, un cône d'écartement (4) qui s'évase en direction de l'extrémité et auquel se rattache, en formant un épaulement de butée (5), une partie frontale (6) dotée d'une pointe cunéiforme (7), ladite tige possédant, à partir du plus petit diamètre du cône d'écartement (4), une région (2) de diamètre réduit s'étendant sur une partie de la longueur de la tige filetée, et sur laquelle est disposée une douille d'ancrage (3) qui s'étend de l'épaulement de butée (5) de la partie frontale (6) jusqu'à l'extrémité de ladite région (2), peut être évasée au moyen du cône d'écartement (4), est constituée d'une matière plastique, et dont la surface de l'enveloppe est pourvue de rainures longitudinales (10).

2. Boulon d'ancrage selon la revendication 1, caractérisé par le fait que la surface de l'enveloppe de la douille d'ancrage (3) présente des rainures (11) s'étendant additionnellement dans le sens périphérique.

3. Boulon d'ancrage selon la revendication 1, caractérisé par le fait que le canal intérieur (12) de la douille d'ancrage (3) correspond au diamètre réduit de la région (2) ; et par le fait que la douille d'ancrage (3) présente, au voisinage du cône d'écartement (4) de la tige filetée (1), un cône intérieur (13) adapté audit cône d'écartement.

4. Boulon d'ancrage selon la revendication 1, caractérisé par le fait que les rainures longitudinales (10) s'achèvent, par rapport à la face extrême antérieure de la douille d'ancrage (3), à une distance correspondant à l'allure du cône intérieur (13) de ladite douille d'ancrage (3).

5. Boulon d'ancrage selon la revendication 1, caractérisé par le fait que le diamètre extérieur de la douille d'ancrage (3) correspond sensiblement au diamètre extérieur de la tige filetée (1).

6. Boulon d'ancrage selon la revendication 1, caractérisé par le fait que la profondeur des rainures est inférieure, d'environ 0,3 à 0,5 mm, à l'épaisseur de paroi de la douille d'ancrage (3).

7. Boulon d'ancrage selon l'une des revendications précédentes, caractérisé par le fait que le diamètre de la partie frontale (6) est sensiblement plus grand que le diamètre de la douille d'ancrage (3) ; et par le fait que la région cylindrique de la partie frontale (6) est munie de deux surfaces (15) s'étendant, de préférence, parallèlement aux surfaces inclinées de la pointe cunéiforme (7).

8. Boulon d'ancrage selon la revendication 7, caractérisé par le fait que l'ouverture de clé des deux surfaces (15) correspond approximativement au diamètre maximal du cône d'écartement (4).
